# EUROPÄISCHE PATENTANMELDUNG

(11) **EP 4 080 847 A1**
(43) Veröffentlichungstag der Anmeldung: **26.10.2022**
(21) Anmeldenummer: 21169516.8
(22) Anmeldetag: 20.04.2021
(51) Int. Cl.: H04L 29/06

(54) **SICHERES VERÄNDERN VON ANWENDUNGSDATEN IN EINER BLOCKCHAIN**

(71) Anmelder: Siemens Aktiengesellschaft, 80333 München (DE)
(72) Erfinder: Höfig, Kai, 83101 Rohrdorf (DE)

(57) **Zusammenfassung**

Die Erfindung gibt ein Computer implementiertes Verfahren zur kryptografische Sicherung von Anwendungsdaten (D1) in einer Blockchain (BC) oder bei einer Distributed-Ledger-Technology an,
aufweisend:
- Erzeugen eines Blocks (B) aufweisend einen ersten Hashwert (H1) und einen zweiten Hashwert (H2) zur kryptografischen Sicherung,
- wobei der erste Hashwert (H1) sowohl aus den Anwendungsdaten (D1) als auch aus weiteren Daten (D2) des unmittelbar vorhergehenden Blocks (B) berechnet wird,
- wobei der zweite Hashwert (H2) nur aus den weiteren Daten (D2) berechnet wird, und
- wobei eine Aneinanderreihung von zweiten Hashwerten (H2) gültig bleibt, wenn Anwendungsdaten (D1) berechtigt entfernt wurden.

Ein zugehöriges Verfahren zum Schreiben oder Löschen eines Blocks werden auch angegeben.

## Beschreibung

### GEBIET DER ERFINDUNG

Die Erfindung betrifft ein Computer implementiertes Verfahren zur kryptografische Sicherung von Anwendungsdaten in einer Blockchain oder bei einer Distributed-Ledger-Technology. Die Erfindung betrifft außerdem ein Computer implementiertes Verfahren zum Erzeugen und Löschen eines Blocks einer Blockchain.

### HINTERGRUND DER ERFINDUNG

Eine Blockchain oder eine s.g. Distributed Ledger-Technologie verhindert das nachträgliche Manipulieren von dezentralisierten, geteilten Daten durch eine Kette von kryptographischen Hashfunktionen. Ein Hash, oder auch Hashwert, ist das Ergebnis einer Hashfunktion. Hash wird oftmals auch als Fingerprint oder Streuwert bezeichnet.

Ein Block besteht aus einer Menge von Anwendungsdaten, z.B. Transaktionsdaten oder benutzerspezifische Daten, und einem Hashwert, der aus dem gesamten vorherigen Block als Eingabe eine Kennziffer errechnet. Auf diese Weise wird eine Manipulation an einem der Blöcke sofort dadurch erkannt, dass der Hashwert des Blockes, der auf einen manipulierten Block folgt, nicht mehr zu dem tatsächlichen Hashwert des manipulierten Blockes passt.

Der Vorteil einer solchen Verkettung von Informationen ist damit die Freiheit von Manipulationen bereits geschriebener Blöcke. Durch diese Eigenschaft ist es möglich, eine solche Verkettung von Blöcken (= Blockchain) auf mehreren Rechnerknoten zu verteilen, die nun nicht mehr im Einflussbereich eines einzelnen liegen, sondern quasi öffentlich sind. Damit ist für jeden Teilnehmer an einem solchen System die Datenlage transparent und manipulationssicher, was insbesondere von Vorteil ist, wenn Transaktionen auf virtuellen Konten gesichert werden sollen (z.B. Bitcoin Transaktionen).

Die aktuelle eingesetzte Blockchain Technologie ist populär und die Dezentralität und Transparenz eröffnet immer neue Anwendungsfälle und Geschäftsmodelle. Leider ist die aktuelle Blockchain Technologie nicht für alle Anwendungsfälle die passende, und bestimmte Probleme lassen sich nicht oder nur unzureichend auf dieser Technologie abbilden.

Ein Anwendungsfall, der sich nur unzureichend abbilden lässt, ist das Filesharing im Allgemeinen. Da eine Blockchain praktisch "nie vergisst" und dezentralisiert allen Teilnehmern am System zur Verfügung steht, ist eine solche Technologie praktisch nicht für Daten einsetzbar, die sich ändern oder auch wieder gelöscht werden.

Wird ein Datum (hier und im Folgenden die Einzahl von Daten) bisher von der Blockchain entfernt, wird damit die Blockchain ungültig und verliert ihre Eigenschaft als Digital Ledger, was für viele Anwendungen, wie die Distributed-Ledger-Technologie, aber von großer Bedeutung ist.

Der Begriff Distributed-Ledger-Technologie (englisch für Technik verteilter Kassenbücher) beschreibt eine Technik, die für die Dokumentation von Transaktionen benutzt wird. Im Gegensatz zum klassischen Ansatz, bei dem ein Hauptbuch in der Regel von nur einer Instanz verwaltet wird, werden hier dezentral beliebig viele, prinzipiell gleichgestellte Kopien des Ledgers von unterschiedlichen Parteien unterhalten. Durch geeignete Maßnahmen wird dafür gesorgt, dass neu hinzuzufügende Transaktionen in allen Kopien des Ledgers übernommen werden und dass es zu einer Übereinkunft (Konsensus) über den jeweils aktuellen Stand des Ledgers kommt.

Auch wenn ein Distributed-Ledger prinzipiell auch anders realisiert werden könnte, ist diese Technik erst durch den Einsatz vernetzter Computer praktikabel geworden. Es wird auch von dezentral geführten Kontobüchern oder Transaktionsdatenbanken gesprochen. Die Technik gilt als wegweisend für die Verwaltung von Daten im Internet ohne proprietäre Plattformen.

Aktuelle Lösungen dezentraler Datenhaltung, wie etwa die Peer-2-Peer Technologie, sind für bestimmte Anwendungsfälle nicht die richtige. So kann z.B. bei der Peer-2-Peer Technologie nicht transparent nachvollzogen werden, wer zu welchem Zeitpunkt neue Daten an die Datenbasis angehängt hat. Außerdem hat nicht jeder Teilnehmer prinzipiell alle Daten, sondern jeder Teilnehmer in einem Peer-2-Peer Netzwerk hat nur einen Teil der Daten.

Bisherige Blockchain Ansätze oder Technologien haben prinzipiell nicht die Möglichkeit nachträglich Daten wieder aus der Blockchain zu entfernen; sie soll ja manipulationssicher sein. Daher ist diese Technologie prinzipiell nicht dazu geeignet, ein universelles Speichermedium zu sein, da hier die wichtigen Datenoperationen wie "update" und "delete" nicht dargestellt werden können. Andererseits wäre die Blockchain Technologie aber ein interessanter Anwendungsfall für eine dezentrale Datenhaltung, um transparent Daten unter Marktteilnehmern zu teilen und zu dokumentieren, dass zu einem bestimmten Zeitpunkt bestimmte Informationen vorhanden waren oder wer sie veröffentlicht hat.

### ZUSAMMENFASSUNG DER ERFINDUNG

Es ist Aufgabe der Erfindung, eine Lösung anzugeben, um bei einer kryptografische Sicherung von Daten in einer Blockchain oder bei der Distributed-Ledger-Technology nachträglich Daten sicher zu entfernen oder hinzuzufügen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Die Erfindung betrifft eine neue "SPREAD (= Aufstrich) Ledger Technologie", die eine spezielle Blockchain Technologie darstellt, die es ermöglicht:
1) Daten in einer Blockchain zu veröffentlichen (CREATE),
2) Daten aus einer Blockchain zu löschen, ohne den Schutz vor unberechtigter Manipulation zu verlieren (DELETE),
3) Daten in einer Blockchain zu verändern, ohne den Schutz vor unberechtigter Manipulation zu verlieren (UPDATE) und
4) Daten aus einer Blockchain zu lesen (READ).

Der Block eines SPREAD Ledgers hat dazu folgenden Aufbau:
Der Datenblock kann beliebige speicherbare Daten (= Anwendungsdaten) enthalten. Zusätzlich ist ein Block eindeutig identifizierbar, z.B. durch einen global eindeutigen code (GUID = globally unique identifyer). Ein Datum (= Einzahl von Daten) oder der Block selbst wird zusätzlich eindeutig einem bestimmten Teilnehmer (= Besitzer) zugeordnet, dem sogenannten "Block Owner". Dazu wird ein eigens generierter "BLOCK OWNER CODE" verwendet. Wie bei den bereits verwendeten Ledger Technologien, schützt ein kryptographischer erster Hashwert vor einer Manipulation eines einmal geschriebenen Blocks, indem der erste Hashwert über die gesamte Datenmenge (= Anwendungsdaten und weitere Daten) des vorhergehenden Blocks berechnet wird (wie eingangs beschrieben).

Zusätzlich dazu hat der Block einen s.g. SPREAD. Der Spread ist ein zweiter Hashwert, der aber nicht aus den ganzen Daten eines vorhergehenden Blocks berechnet wird, sondern nur aus den Parametern (= weitere Daten), die nicht die Anwendungsdaten des Blocks enthalten.

Auf diese Weise entsteht eine zweifach verkettete Liste: "oben" entsteht durch die klassischen ersten Hashwerte eine Blockchain, die nur eine gültige Aneinanderreihung von ersten Hashwerten darstellt, wenn kein Block in irgendeiner Weise verändert wurde. "Unten" entsteht eine weitere Blockchain parallel dazu, die aber auch eine gültige Aneinanderreihung von zweiten Hashwerten darstellt, wenn nur der Datenanteil (= Anwendungsdaten) eines Blocks verändert wurde. Die "SPREAD Hash Kette" (= Kette von zweiten Hashwerten) ist also tolerant gegenüber dem Löschen oder dem Verändern von Daten eines Blocks.

Ein weiterer Aspekt der Erfindung betrifft die Löschung von Transaktionsdaten. Um erfolgreich eine Löschaktion durchführen zu können, wird sicher dokumentiert, ob bei einem Block jeweils der erste Hashwert oder der zweite Hashwert Gültigkeit hat. Ist nur der zweite Hashwert gültig, werden Datenmanipulationen des Blocks ignoriert und soll nur der erste Hashwert Gültigkeit haben, werden Datenmanipulationen nicht toleriert und die Blockchain ggf. für ungültig erklärt.

Die Erfindung beansprucht ein Computer implementiertes Verfahren zur kryptografische Sicherung von Anwendungsdaten in einer Blockchain oder bei einer Distributed-Ledger-Technology, mit:
- Erzeugen eines Blocks aufweisend einen ersten Hashwert und einen zweiten Hashwert zur kryptografischen Sicherung,
- wobei der erste Hashwerts sowohl aus den Anwendungsdaten als auch aus weiteren Daten des unmittelbar vorhergehenden Blocks berechnet wird,
- wobei der zweite Hashwert nur aus den weiteren Daten berechnet wird, und
- wobei eine Aneinanderreihung von zweiten Hashwerten gültig bleibt, wenn Anwendungsdaten berechtigt entfernt wurden.

Die weiteren Daten können auch als Steuerungsdaten bezeichnet werden.

In einer weiteren Ausführungsform können Anwendungsdaten aus der Blockchain entfernt werden, wenn durch einen berechtigten Besitzer eines Blocks durch Einfügen eines weiteren Blocks mit der entsprechenden Berechtigung der zu entfernende Block als gelöscht markiert wurden.

In einer weiteren Ausführungsform können die weiteren Daten einen BLOCK OWNER CODE und eine BLOCK GUID enthalten.

Die Erfindung beansprucht auch ein Computer implementiertes Verfahren zum Erzeugen eines Blocks einer Blockchain, wobei die Blockchain nach dem erfindungsgemäßen Verfahren kryptografisch gesicherten ist, aufweisend die Schritte:
- eine Erzeugung einer BLOCK GUID, wobei die BLOCK GUID eine global eindeutige Bezeichnung für den Block ist, in dem Anwendungsdaten eines Besitzers speicherbar sind,
- aus der BLOCK GUID und einem privaten geheimem Passwort des Besitzers eine Erzeugung eines Schlüsselpaars, bestehend aus einem privaten Schlüssel und einem öffentlichen Schlüssel, für eine asymmetrische Signierung,
- eine Verschlüsselung der BLOCK GUID mit dem privaten Schlüssel, wodurch ein BLOCK OWNER CODE erzeugt wird,
- eine Übermittlung der Anwendungsdaten des Besitzers, der BLOCK GUID und des BLOCK OWNER CODE an die Blockchain, und
- Erzeugung eines neuen Blocks, aufweisend die Anwendungsdaten sowie einen ersten Hashwert und einen zweiten Hashwert für den vorhergehenden Block.

Die Erfindung beansprucht des Weiteren ein Computer implementiertes Verfahren zum Löschen von erfindungsgemäß kryptografisch gesicherten Anwendungsdaten, aufweisend die Schritte:
- eine Übermittlung eines Löschblocks an die Blockchain, wobei der Löschblock keine BLOCK GUID und keinen BLOCK OWNER CODE aufweist, sondern nur den öffentlichen Schlüssel zum Entschlüsseln des BLOCK OWNER CODES des zu löschenden Blocks,
- eine Entschlüsselung des BLOCK OWNER CODE mit dem öffentlichen Schlüssel,
- wenn der BLOCK OWNER CODE gleich der BLOCK GUID ist, hat der Besitzer des Blocks die Löschung der Anwendungsdaten in Auftrag gegeben und die Anwendungsdaten werden entfernen.

Bei der Verifikation der Blockchain, gilt dann künftig der zweite Hashwert für diesen Block, der weiterhin seine Gültigkeit behält, auch wenn die Anwendungsdaten entfernt wurden.

Schließlich beansprucht die Erfindung auch eine Einrichtung, die ausgebildet und programmiert ist, das erfindungsgemäße Verfahren auszuführen.

Die Erfindung bietet den Vorteil, kryptografisch gesicherte Anwendungsdaten einer Blockchain berechtigt zu löschen.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: einen Block gemäß der neuen SPREAD Ledger Technologie, und
- FIG. 2: eine Protokollstruktur für das Löschen eines Transaktionsdatensatzes.

### DETAILLIERTE BESCHREIBUNG DER ERFINDUNG

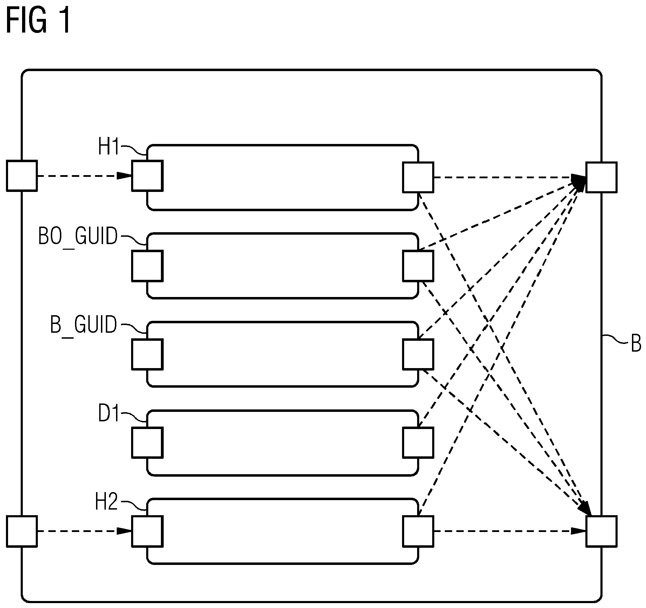

In einer Anwendung des Verfahrens ist sicherzustellen, dass unberechtigte Teilnehmer keinen Zugriff auf die Anwendungsdaten D1 des Blocks B (siehe FIG. 1) erhalten. Hier ist aber nur der Mechanismus beschrieben, wie Datenmanipulationen in einer Blockchain BC Technologie mittels SPREAD Mechanismus dargestellt werden können. Die Art und Weise, wie Daten verschlüsselt werden ist von Anwendung zu Anwendung verscheiden und wird hier nicht näher beschrieben.

Da die Datenmenge in einer Blockchain BC Kosten verursacht, zum Beispiel durch verbrauchten Speicherplatz und auch durch höhere Transaktionskosten, wenn ein Teilnehmer die Blockchain BC verifizieren möchte und die dazu aus dem Netzwerk runterladen möchte, ist es im Sinne der gemeinschaftlichen Nutzung, wenn als gelöscht markierte Blöcke B auch tatsächlich gelöscht werden. Natürlich können jetzt wieder einzelne Teilnehmer die Löschung verweigern oder die Anwendungsdaten D1 speichern, das ist aber bei allen veröffentlichten Daten bzw. bei allen geteilten Daten der Fall und das ist wiederum ein Problem der passenden Verschlüsselung.

Die technologische Neuheit des Verfahrens besteht darin, einerseits die Ergänzung einer Blockchain BC um einen zweiten Hashwert H2, dem sogenannten SPREAD, um Löschungen überhaupt erst möglich zu machen, ohne die Freiheit von unerlaubter Manipulation der Blockchain BC zu verlieren. Andererseits besteht die technische Neuheit aber auch aus dem speziellen Verfahren mittels dessen ein Löschbefehl in die Blockchain BC so eingespeichert wird, dass nur der Besitzer einer Datei diese auch löschen kann.

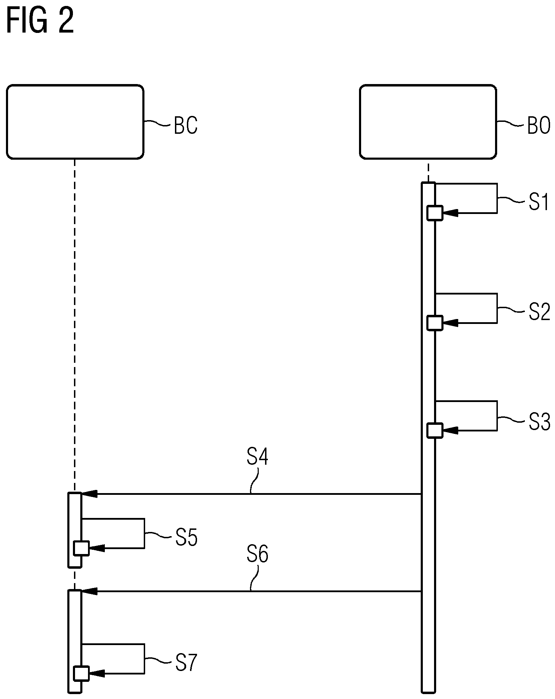

Ein Erzeugen und ein Löschen eines Besitzers BO eines Blocks B (FIG. 1) in einer Blockchain BC (siehe Ablaufdiagramm der FIG. 2) kann nun auf folgende Weise dokumentiert werden:
Erster Schritt S1: Zunächst generiert Bob (= Besitzer BO, Owner) sich eine neue BLOCK GUID B_GUID, um einen global eindeutigen Bezeichner für den Block B zu haben, in dem er Anwendungsdaten speichern möchte.
Zweiter Schritt S2: Bob generiert dann aus der BLOCK GUID B_GUID und einem privaten geheimem Passwort ein Schlüsselpaar für eine asymmetrische Signierung z.B. nach dem RSA Verfahren.
Dritter Schritt S3: Bob verschlüsselt dann die BLOCK GUID B_GUID mit dem zuvor generierten privaten Schlüssel und erhält so den BLOCK OWNER CODE BO_GUID.
Vierter Schritt S4: Bob übermittelt dann die Anwendungsdaten D1, die er speichern möchte, die BLOCK GUID B_GUID und den BLOCK OWNER CODE BO_GUID an die Blockchain BC.
Fünfter Schritt S5: Diese erzeugt einen neuen Block B mit diesen Anwendungsdaten D1. Zusätzlich werden der erste Hashwert H1 und der zweite Hashwert H2 für den vergangenen Block berechnet.
Sechster Schritt S5: Um nun die Anwendungsdaten D1 als gelöscht zu markieren, übermittelt Bob einen Löschblock an die Blockchain BC. Dieser benötigt keine BLOCK GUID B_GUID und keinen BLOCK OWNER CODE BO_GUID, sondern enthält nur den öffentlichen Schlüssel zum Entschlüsseln des BLOCK OWNER CODES BO_GUID des zu löschenden Blocks B und die BLOCK GUID B_GUID.
Siebter Schritt S7: Die Blockchain BC kann dann den BLOCK OWNER CODE BO_GUID entschlüsseln und wenn dieser gleich der BLOCK GUID B_GUID ist, hat offensichtlich Bob die Löschung in Auftrag gegeben (d.h. die Authentizität ist geprüft) und die Blockchain BC kann die bezeichneten Anwendungsdaten entfernen.

Bei der Verifikation der Blockchain BC, gilt dann künftig der zweite Hashwert H2 für diesen Block B, der weiterhin seine Gültigkeit behält, auch wenn die Anwendungsdaten D1 entfernt wurden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- B: Block
- BC: Blockchain mit Blöcken B
- BO: Besitzer eines Blocks B
- B_GUID: Block ID
- BO_GUID: Besitzer ID
- D1: Anwendungsdaten
- D2: Weitere Daten
- H1: Erster Hashwert
- H2: Zweiter Hashwert
- S1: Erster Schritt
- S2: Zweiter Schritt
- S3: Dritter Schritt
- S4: Vierter Schritt
- S5: Fünfter Schritt
- S6: Sechster Schritt
- S7: Siebter Schritt

## Patentansprüche

1. Computer implementiertes Verfahren zur kryptografische Sicherung von Anwendungsdaten (D1) in einer Blockchain (BC) oder bei einer Distributed-Ledger-Technology,
**gekennzeichnet durch**:
- Erzeugen eines Blocks (B) aufweisend einen ersten Hashwert (H1) und einen zweiten Hashwert (H2) zur kryptografischen Sicherung,
- wobei der erste Hashwert (H1) sowohl aus den Anwendungsdaten (D1) als auch aus weiteren Daten (D2) des unmittelbar vorhergehenden Blocks (B) berechnet wird,
- wobei der zweite Hashwert (H2) nur aus den weiteren Daten (D2) berechnet wird, und
- wobei eine Aneinanderreihung von zweiten Hashwerten (H2) gültig bleibt, wenn Anwendungsdaten (D1) berechtigt entfernt wurden.

2. Verfahren nach Anspruch 1,
**dadurch gekennzeichnet,**
**dass** die Anwendungsdaten (D1) des Blocks (B) aus der Blockchain (BC) entfernt werden, wenn durch einen berechtigten Besitzer (BO) eines Blocks (B) durch Einfügen eines weiteren Blocks mit einer entsprechenden Berechtigung der zu entfernende Block (B) als gelöscht markiert wurden.

3. Verfahren nach Anspruch 1 oder 2,
**dadurch gekennzeichnet,**
**dass** die weiteren Daten (D2) einen BLOCK OWNER CODE (BO_GUID) und eine BLOCK GUID (B_GUID) enthalten.

4. Computer implementiertes Verfahren zum Erzeugen eines Blocks (B) einer Blockchain (BC), wobei die Blockchain (BC) nach einem der Ansprüche 1 bis 3 kryptografisch gesicherten ist,
**gekennzeichnet durch** die Schritte:
- eine Erzeugung einer BLOCK GUID (B_GUID), wobei die BLOCK GUID eine global eindeutige Bezeichnung für den Block (B) ist, in dem Anwendungsdaten (D1) eines Besitzers (BO) speicherbar sind (Schritt S1),
- aus der BLOCK GUID (B_GUID) und einem privaten geheimem Passwort des Besitzers (BO) eine Erzeugung eines Schlüsselpaars, bestehend aus einem privaten Schlüssel und einem öffentlichen Schlüssel, für eine asymmetrische Signierung (Schritt S2),
- eine Verschlüsselung der BLOCK GUID (B_GUID) mit dem privaten Schlüssel, wodurch ein BLOCK OWNER CODE (BO_GUID) erzeugt wird (Schritt S3),
- eine Übermittlung der Anwendungsdaten (D1) des Besitzers (BO), der BLOCK GUID und des BLOCK OWNER CODE an die Blockchain (Schritt S4), und
- Erzeugung eines neuen Blocks, aufweisend die Anwendungsdaten (D1) sowie einen ersten Hashwert (H1) und einen zweiten Hashwert (H2) für den vorhergehenden Block.

5. Computer implementiertes Verfahren zum Löschen von nach Anspruch 4 kryptografisch gesicherten Anwendungsdaten,
**gekennzeichnet durch**:
- eine Übermittlung eines Löschblocks an die Blockchain (BC), wobei der Löschblock keine BLOCK GUID und keinen BLOCK OWNER CODE aufweist, sondern nur den öffentlichen Schlüssel zum Entschlüsseln des BLOCK OWNER CODES des zu löschenden Blocks (Schritt S6),
- eine Entschlüsselung des BLOCK OWNER CODE mit dem öffentlichen Schlüssel,
- wenn der BLOCK OWNER CODE gleich der BLOCK GUID ist, hat der Besitzer des Blocks die Löschung der Anwendungsdaten in Auftrag gegeben und die Anwendungsdaten werden entfernen (Schritt S7).

6. Einrichtung, ausgebildet und programmiert das Verfahrens nach einem der vorhergehenden Ansprüche auszuführen.
